(19) Europäisches Patentamt / European Patent Office / Office européen des brevets

(11) **EP 4 383 157 A1**

(12) **EUROPEAN PATENT APPLICATION**
published in accordance with Art. 153(4) EPC

(43) Date of publication:
**12.06.2024 Bulletin 2024/24**

(21) Application number: **22852623.2**

(22) Date of filing: **06.05.2022**

(51) International Patent Classification (IPC):
**G06Q 10/04** (2023.01)    **G05B 19/418** (2006.01)

(52) Cooperative Patent Classification (CPC):
**G05B 19/418; G06Q 10/04; Y02P 90/30**

(86) International application number:
**PCT/JP2022/019605**

(87) International publication number:
**WO 2023/013194 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 JP 2021130062**

(71) Applicant: **Panasonic Intellectual Property
Management Co., Ltd.
Kadoma-shi, Osaka 571-0057 (JP)**

(72) Inventor: **KANEKO, Yuki
Kadoma-shi, Osaka 571-0057 (JP)**

(74) Representative: **Grünecker Patent- und
Rechtsanwälte
PartG mbB
Leopoldstraße 4
80802 München (DE)**

(54) **LAYOUT ANALYSIS DEVICE AND LAYOUT ANALYSIS METHOD**

(57) A layout analysis device (2) generates information indicating a layout analysis for a plurality of facilities (E). The layout analysis device includes: a memory (21) configured to store a first layout indicating an arrangement of the plurality of facilities; and a controller (20) configured to acquire a second layout calculated by numerical optimization to optimize the arrangement of the plurality of facilities from the first layout. The controller is configured to: specify a characteristic portion in the second layout as compared with the first layout; and generate analysis information indicating a relation between the optimization and at least one of the specified portion in the second layout or a corresponding portion to the specified portion in the first layout.

*Fig. 6*

EP 4 383 157 A1

**Description**

TECHNICAL FIELD

The present disclosure relates to a layout analysis device and a layout analysis method.

BACKGROUND

Patent Document 1 discloses an arrangement optimization system that analyzes an arrangement of a plurality of arrangement targets. A database server in the arrangement optimization system stores a work result table indicating arrangement targets, actual arrangement places, and actual work times for work, and location information indicating a plurality of arrangement places where the arrangement targets can be arranged. An analysis server in the arrangement optimization system acquires an interaction search guideline including a plurality of interaction expression patterns that affects the work times required for work, and generates an arrangement plan indicating a plan of arrangement places where the arrangement targets are arranged, based on work result information, location information, and the interaction search guideline. An object of Patent Document 1 is to provide an arrangement optimization system capable of improving work efficiency.

Patent Document
Patent Document 1: JP 2020-119166 A

SUMMARY

The present disclosure provides a layout analysis device and a layout analysis method capable of facilitating, for a user, analysis of a layout where the arrangement of facilities is optimized.
A layout analysis device of the present disclosure generates information indicating a layout analysis for a plurality of facilities. The layout analysis device includes: a memory configured to store a first layout indicating an arrangement of the plurality of facilities; and a controller configured to acquire a second layout calculated by numerical optimization to optimize the arrangement of the plurality of facilities from the first layout. The controller is configured to: specify a characteristic portion in the second layout as compared with the first layout; and generate analysis information indicating a relation between the optimization and at least one of the specified portion in the second layout or a corresponding portion to the specified portion in the first layout.
These general and specific aspects may be implemented by a system, a method, and a computer program, and a combination thereof.
According to the layout analysis device and the layout analysis method of the present disclosure, the layout in which the arrangement of the facilities is optimized is enabled to facilitate analysis by a user.

BRIEF DESCRIPTION OF DRAWINGS

Fig. 1 is a diagram illustrating an overview of a trajectory analysis system according to a first embodiment of the present disclosure;
Fig. 2 is a block diagram illustrating a configuration of a layout analysis device according to a first embodiment;
Figs. 3A and 3B are diagrams for describing an overview of an operation of the layout analysis device;
Fig. 4 is a flowchart for describing the operation of the layout analysis device;
Figs. 5A and 5B are diagrams for describing graph information in the layout analysis device;
Fig. 6 is a diagram illustrating a display example in the layout analysis device;
Fig. 7 is a flowchart illustrating layout optimization processing in the layout analysis device;
Fig. 8 is a diagram illustrating map graph information in the layout optimization processing;
Fig. 9 is a flowchart illustrating processing for analyzing a partial structure in the layout analysis device;
Figs. 10A and 10B are diagrams for describing processing for analyzing the partial structure in the layout analysis device;
Fig. 11 is a centrality table of a current layout in the layout analysis device;
Fig. 12 is a flowchart illustrating processing for analyzing a centrality index in the layout analysis device; and
Fig. 13 is a centrality table of a current layout in the layout analysis device.

DETAILED DESCRIPTION

Hereinafter, embodiments will be described in detail with reference to the drawings as appropriate. However, more detailed description than necessary may be omitted. For example, detailed descriptions of already well-known matters and duplicate descriptions for substantially the same configuration may be omitted. This is to avoid unnecessary redundancy of the following description and to facilitate the understanding of those skilled in the art.

It should be noted that the applicant(s) provides the accompanying drawings and the following description in order that those skilled in the art fully understand the present disclosure, and does not intend the provided drawings and description limit the subject matter described in the claims.

(First Embodiment)

A first embodiment of the present disclosure will be described below with reference to the drawings.

1. Configuration

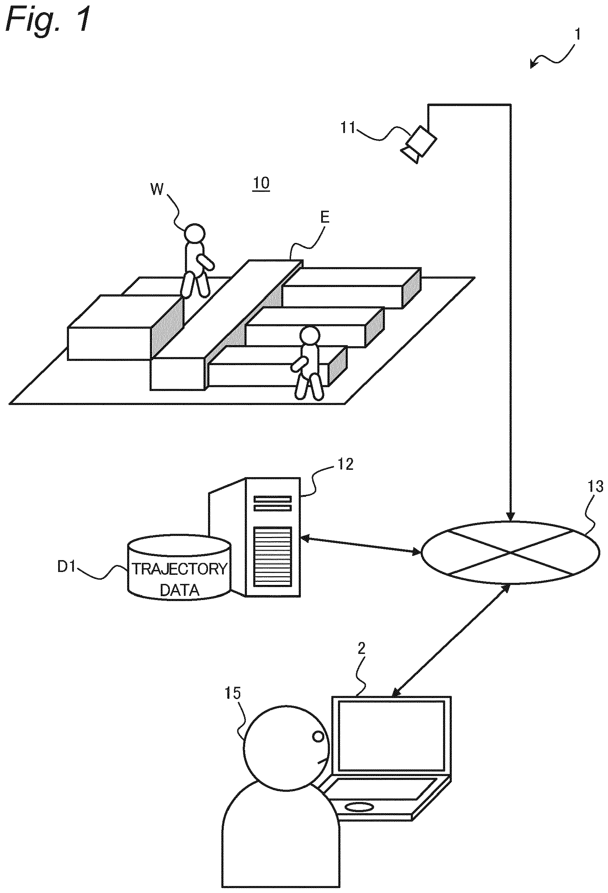

A system using a layout analysis device according to the first embodiment will be described with reference to Fig. 1.

1-1. Overview of System

Fig. 1 illustrates an overview of a trajectory analysis system 1 according to the present embodiment. As illustrated in Fig. 1, the system 1 includes a camera 11, a trajectory management server 12, and a layout analysis device 2, for example. The system 1 is applied to a workplace 10 provided with various facilities in a factory, a distribution warehouse, a store, or the like.

In the present embodiment, the trajectory analysis system 1 accumulates, for analysis, information such as a trajectory along which one or more workers W moving in the workplace 10 including a plurality of facilities E. The system 1 can be applied to data analysis or the like that a user 15, such as a manager or an analyst of the workplace 10, analyzes a layout of the facilities E that are arranged in the workplace 10 from the viewpoint of improving work efficiency or the like of the worker W. The respective devices of the system 1 is connected to a communication network 13 such as a local area network (LAN), a wide area network (WAN), or the Internet, and can perform data communication.

In the system 1, the camera 11 is disposed to capture images that cover a range including the facilities E in the workplace 10. For example, the camera 11 is communicably connected to the trajectory management server 12 via the communication network 13 to be able to transmit data of an imaged result of the workplace 10. The camera 11 may be an omnidirectional camera, a box camera, or the like. The system 1 may include a plurality of cameras 11.

The trajectory management server 12 is a server device including a memory or the like that accumulates and manages information such as imaged data obtained by the camera 11 and trajectory data D1 indicating various trajectories based on the imaged data.

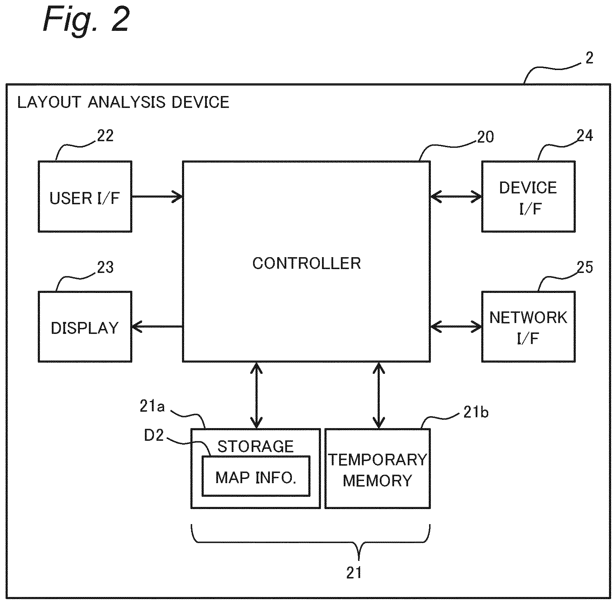

The layout analysis device 2 according to the present embodiment presents information to be used for analysis by the user 15, based on the accumulated information such as the trajectory data D1 in the system 1. The layout analysis device 2 includes an information processing device such as a personal computer (PC). A configuration of the layout analysis device 2 will be described with reference to Fig. 2.

1-2. Configuration of Layout Analysis Device

Fig. 2 is a block diagram illustrating the configuration of the layout analysis device 2. The layout analysis device 2 illustrated in Fig. 2 includes a controller 20, a memory 21, a user interface 22, a display 23, a device interface 24, and a network interface 25. Hereinafter, an interface may be abbreviated as an "I/F".

The controller 20 includes a central processing unit (CPU) or a microprocessor unit (MPU) that cooperates with software to implement predetermined functions. The controller 20 controls the overall operation of the layout analysis device 2, for example. The controller 20 reads the data and the programs stored in the memory 21, and performs various operation processing to implement various functions.

For example, the controller 20 executes a program including a command set for executing the various functions. The above programs may be provided from the communication network 13 or may be stored in a portable recording medium. The controller 20 may be a hardware circuit such as a dedicated electronic circuit or a reconfigurable electronic circuit designed to perform the various functions. The controller 20 may be configured with various semiconductor integrated circuits such as a CPU, an MPU, a graphics processing unit (GPU), a general purpose graphics processing unit (GPGPU), a time processing unit (TPU), a microcomputer, a digital signal processor (DSP), a field-programmable grid array (FPGA) and an application specific integrated circuit (ASIC).

The memory 21 is a storage medium that stores programs and data necessary for implementing the functions of the layout analysis device 2. As illustrated in Fig. 2, the memory 21 includes a storage 21a and a temporary memory 21b.

The storage 21a stores parameters, data, control programs, and the like for implementing predetermined functions. The storage 21a includes a hard disk drive (HDD) or a solid state disk (SSD). The storage 21a stores the above-described programs, map information D2, and the like. The map information D2 indicates the layout of the respective facilities E and the like in the workplace 10 in a predetermined coordinate system.

The temporary memory 21b includes a random access memory (RAM) such as a dynamic RAM (DRAM) or a static RAM (SRAM), and temporarily stores (i.e., holds) data. For example, the temporary memory 21b holds the trajectory data D1 and the like received from the trajectory management server 12 (Fig. 1). The temporary memory 21b may function as a work area of the controller 20, and may be configured with a storage area in an internal memory of the controller 20.

The user interface 22 is a general term of an operation member operated by a user. The user interface 22 may be a keyboard, a mouse, a touch pad, a touch panel, a button, a switch, or the like. The user interface 22 is an example of an input interface that acquires various information input by a user operation.

The display 23 is an example of an output interface configured with, a liquid crystal display or an organic electroluminescence (EL) display, for example. The display 23 may display various information such as various icons for operating the user interface 22 and information input from the user interface 22.

The device I/F 24 is a circuit for connecting an external device to the layout analysis device 2. The device I/F 24 performs communication according to a predetermined communication standard. The predetermined standard includes Universal Serial Bus (USB), High-Definition Multimedia Interface (HDMI: registered trademark), Institute of Electrical and Electronic Engineers (IEEE) 1394, WiFi, and Bluetooth. The device I/F 24 may constitute an input interface that receives various information from an external device in the layout analysis device 2 or an output interface that transmits various information to the external device.

The network I/F 25 is a circuit for connecting the layout analysis device 2 to the communication network 13 via a wireless or wired communication line. The network I/F 25 performs communication according to a predetermined communication standard. The predetermined communication standard includes communication standards such as IEEE 802.3 and IEEE 802. 11 a/11 bl 11 gill ac. The network I/F 25 may constitute an input interface that receives various information or an output interface that transmits various information via the communication network 13 in the layout analysis device 2.

The configuration of the layout analysis device 2 as described above is an example, and the configuration of the layout analysis device 2 is not limited thereto. For example, the layout analysis device 2 may include various computers including a server device. The layout analysis device 2 may be configured integrally with the trajectory management server 12.

In addition, the input interface in the layout analysis device 2 may be implemented by cooperation with various software in the controller 20 or the like. The input interface in the layout analysis device 2 may acquire various information by reading various information stored in various storage media (e.g., the storage 21a) to a work area (e.g., the temporary memory 21b) of the controller 20.

Further, various display devices such as a projector and a head mount display may be used as the display 23 of the layout analysis device 2. For example, in a case where an external display device is used, the display 23 of the layout analysis device 2 may be an output interface circuit for a video signal or the like conforming to the HDMI (registered trademark) standard or the like.

2. Operation

The operations of the trajectory analysis system 1 and the layout analysis device 2 configured as described above will be described below.

In the trajectory analysis system 1 (Fig. 1) of the present embodiment, the camera 11 sequentially captures images of the workplace 10 for each frame, and transmits imaged data to the trajectory management server 12. The trajectory management server 12 performs image recognition for recognizing the position of the worker W in the captured images for each frame indicated by the imaged data from the camera 11, to generate the trajectory data D1. The trajectory management server 12 accumulates the trajectory data D1 by sequentially storing the generated trajectory data D1 in the memory.

The layout analysis device 2 of the present embodiment executes numerical calculation simulation for optimizing the layout where the facilities E are arranged in the workplace 10 under a predetermined optimization condition, based on the trajectory data D1 accumulated as described above. The optimization condition is, for example, to minimize the total of the distances by which the worker W has moved between the plurality of facilities E in the trajectory data D1.

2-1. Overview of Operation

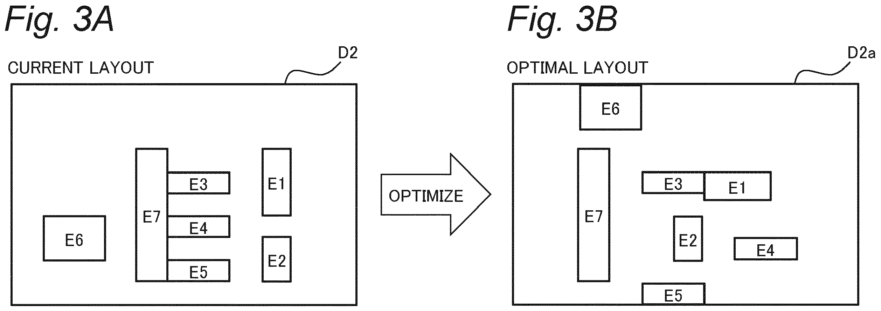

The overview of the operation of the layout analysis device 2 in the present embodiment will be described with reference to Figs. 3A and 3B.

Fig. 3A illustrates map information D2 indicating a current layout at a time when the trajectory data D1 is accumulated in the system 1. The current layout is an example of a first layout to be a subject for layout optimization in the layout analysis device 2. The current layout indicates a positional relation where the plurality of facilities E1 to E7 is actually arranged in the workplace 10. Hereinafter, a generic term of the facilities E1 to E7 is referred to as a facility E. Although the seven facilities E1 to E7 are illustrated in Figs. 3A and 3B, the number of the facilities E in the workplace 10 is not particularly limited, and may be 8 or more, or six or less.

The current layout illustrated in Fig. 3A includes a tidy arrangement where the facilities E3, E4, and E5 are arranged respectively adjacent to the facility E7 and aligned with each other. Such a current layout may be constructed by an empirical rule or the like of the worker W or the administrator of the workplace 10.

Fig. 3B illustrates map information D2a on an optimal layout in the layout analysis device 2. The optimal layout is an example of a second layout generated as a result of the numerical simulation of the layout optimization by the layout analysis device 2. In the optimal layout illustrated in Fig. 3B, the arrangement of the facilities E1 to E7, which are the same in the current layout of Fig. 3A, is changed, so that the tidy alignment of the facilities E3 to E7 described above is broken. Such an optimal layout may appear disordered at first glance. The inventor has intensively studied such a numerical simulation of the layout optimization to find a problem occurring therein.

That is, the optimal layout is obtained as a result of comprehensively adjusting the arrangement of the plurality of facilities E1 to E7 in the numerical simulation of the layout optimization. In view of the above, the inventor has found a problem that, in the prior art, a causal relation such as what effect is provided by which portion in the optimal layout to achieve improvement from an on-site layout is unknown. That is, according to the prior art, for example, when the user 15 proposes the optimal layout to the administrator or the like of the workplace 10, the problem has been found newly. The problem is that a convincing proposal is difficult, or a proposal of partially introduction of the optimal layout is difficult in a case where the optimal layout cannot be entirely introduced.

Therefore, the layout analysis device 2 of the present embodiment compares the optimal layout with the current layout, and presents information with which it is possible to understand which portion in the optimal layout provides what effect. As a result, the optimal layout can be flexibly analyzed for the user 15 and the like, and useful information can be presented when the user 15 proposes the optimal layout. Details of the operation of the layout analysis device 2 in the present embodiment will be described below.

2-2. Overall Operation

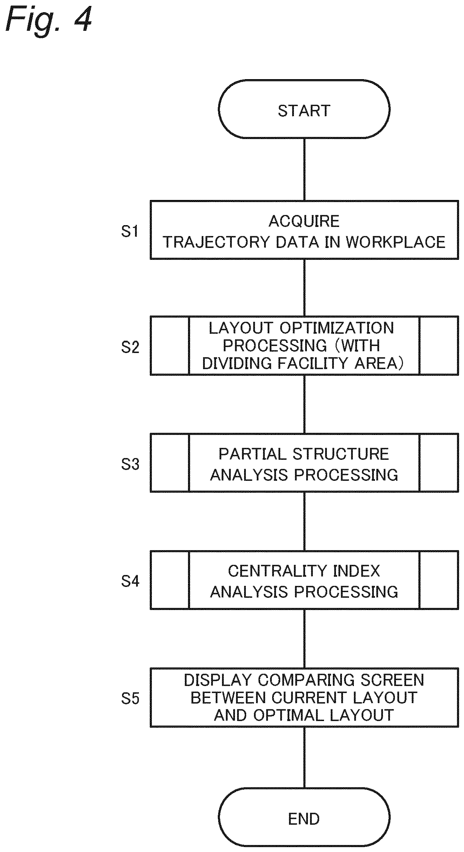

The overall operation of the layout analysis device 2 of the present embodiment will be described with reference to Figs. 4 to 6. In the layout analysis device 2 of the present embodiment, the information described above is presented by data analysis using graph theory.

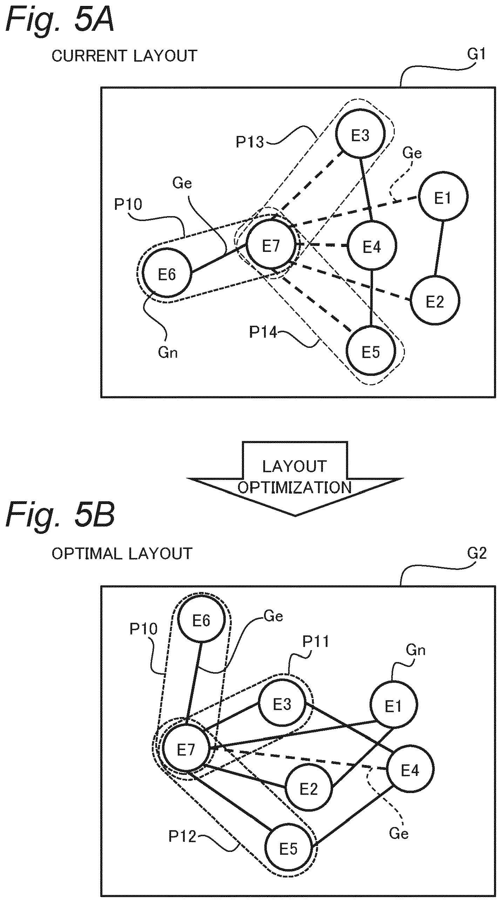

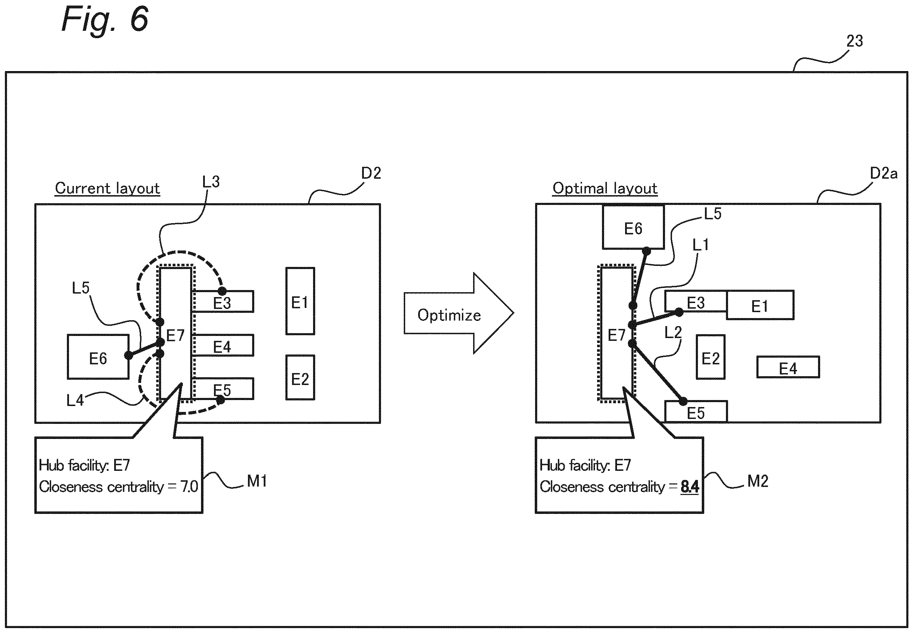

Fig. 4 is a flowchart for describing the operation of the layout analysis device 2. Figs. 5A and 5B are diagrams for describing graph information G1 and G2 in the layout analysis device 2. Fig. 6 illustrates a display example in the layout analysis device 2. The processing illustrated in the flowchart of Fig. 4 is started, for example, in a state where the map information D2 on the current layout is stored in the memory 21 of the layout analysis device 2, and is executed by the controller 20.

First, the controller 20 of the layout analysis device 2 acquires the trajectory data D1 from, for example, the trajectory management server 12 via the network I/F 25 (S1). The acquisition of the trajectory data D1 is not limited to the above, and for example, the controller 20 of the layout analysis device 2 may extract the trajectory from the imaging data of the camera 11. The user 15 may input the trajectory data D1 stored in a portable recording medium to the layout analysis device 2.

Next, the controller 20 performs layout optimization processing that is processing for calculating an optimal layout by a numerical simulation of layout optimization based on the acquired trajectory data D1 and the map information D2 on the current layout (S2). The present embodiment uses an algorithm that enables the layout optimization of the facilities E1 to E7 having different sizes by equally dividing the areas where the plurality of facilities E1 to E7 is arranged in the map information D2. In step S2, the feature of the current layout is analyzed by using the graph theory. Details of the processing in step S2 will be described later.

Fig. 5A illustrates the graph information G1 on the current layout acquired in step S2. Fig. 5B illustrates the graph information G2 on the optimal layout. The graph information G1 and G2 indicates the features of the layouts of the facilities E according to the graph theory. The graph information G1 and G2 on the layouts includes nodes Gn indicating the facilities E and edges Ge connecting the two nodes Gn. Each edge Ge indicates a characteristic related to the movement of the worker W between the corresponding two facilities E. For example, the edge Ge indicated by a solid line in Figs. 5A and 5B indicates a relatively short moving distance, and the edge Ge indicated by a broken line indicates a relatively long moving distance.

Based on the calculation result of the layout optimization processing (S2), the controller 20 performs processing for analyzing a structure of a characteristic portion in the graph information G2 on the optimal layout (S3). In the partial structure analysis processing (S3), characteristic partial structures P10, P11, and P12 in the graph information G2 on the optimal layout are extracted by using the information during the calculation in the layout optimization processing (S2). In Fig. 5A, locations P13 and P14 corresponding to the partial structures P11 and P12 of the optimal layout in the graph information G1 on the current layout are illustrated together with the partial structure P10 common in the layouts.

Among the partial structures P10 to P12 extracted from the graph information G2 on the optimal layout as described above, it is expected that the partial structures P11 and P 12 which are not included in the graph information G1 on the current layout indicate a factor that the optimal layout is improved from the current layout. On the other hand, the partial structure P10 common in both the optimal layout and the current layout is expected as a point to be evaluated as fine in the current layout. Details of the processing in step S3 will be described later.

The controller 20 performs processing for analyzing a centrality index in the graph information G2 on the optimal layout from the viewpoint of comparison with the current layout (S4). The centrality index is an index indicating a central feature in the graph information G2. In the centrality index analysis processing (S4) of the present embodiment, page ranks and closeness centrality are used as the centrality index.

In step S4 of the present embodiment, the degree to which the worker W can easily access to a facility functioning as a hub for the worker W to move between the facilities E1 to E7 and access to the desired facility E in the workplace 10, that is, a hub facility is quantitatively evaluated by using the centrality index described above. In the present embodiment, the page rank is an example of the centrality index for measuring the degree to which each facility E in the workplace 10 is expected to be a hub facility. In the present embodiment, the closeness centrality is an example of the centrality index for measuring the accessibility of the worker W to each facility E in various layouts of the workplace 10. Details of the processing in step S4 will be described later.

Next, based on the information acquired by the partial structure analysis processing (S3) and the centrality index analysis processing (S4), the controller 20 causes the display 23 to display information indicating an analysis result of comparison between the current layout and the optimal layout (S5). Fig. 6 illustrates a display example of the layout analysis device 2 in step S5.

In the example of Fig. 6, the display 23 displays an analysis screen where the map information D2 on the current layout and the map information D2a on the optimal layout are provided. Based on the processing result of the partial structure analysis processing (S3), the controller 20 causes improvement factor lines L1 and L2, bottleneck factor lines L3 and L4, and an evaluation line L5 to be displayed on the analysis screen of the display 23 (S5). Based on the processing result of the centrality index analysis processing (S4), the controller 20 causes hub facility messages M1 and M2 to be displayed on the analysis screen (S5).

The controller 20 ends the processing illustrated in this flowchart by displaying such an analysis screen (S5).

According to the above processing, the layout analysis device 2 uses the data analysis based on the graph theory to compare the current layout with the optimal layout (S3 and S4), thereby generating information with which it is possible to get an idea of what portion in the optimal layout has what effect and displaying the generated information on the analysis screen (S5). The various lines L1 to L5 and the messages M1 and M2 displayed on the analysis screen are examples of analysis information suggesting a causal relation between a corresponding portion in the optimal layout or the current layout and the layout optimization in the present embodiment.

For example, in the analysis screen illustrated in Fig. 6, the hub facility messages M1 and M2 indicate that the hub facility in the workplace 10 is the facility E7, and the closeness centrality of the hub facility E7 is improved from a current layout value "7.0" to a value "8.4" in the optimal layout. As in the hub facility messages M1 and M2, according to the processing result of the centrality index analysis processing (S4), the user 15 can quantitatively understand the degree of improvement in the accessibility to the hub facility E7 in the optimal layout.

For example, in the example of Fig. 6, the improvement factor lines L1 and L2 indicate that the moving distance between the facility E3 and the hub facility E7 and the moving distance between the facility E5 and the hub facility E7 are relatively shorter in the optimal layout. The bottleneck factor lines L3 and L4 indicate that the moving distance between the facility E3 and the hub facility E7 and the moving distance between the facility E5 and the hub facility E7 are relatively longer in the current layout. The evaluation lien L5 indicates that the moving distance between the facility E6 and the hub facility E7 is relatively shorter in both the current layout and the optimal layout.

According to the bottleneck factor lines L3 and L4 described above, it can be seen that in the current layout, due to the adjacent arrangement of the hub facility E7 and the facilities E3 and E5, the worker W needs to make a detour when moving. In contrast to this, according to the improvement factor lines L1 and L2, the optimal layout can be seen that passages are formed by providing an interval between the hub facility E7 and the facilities E3 and E5, and thus the detouring movement as in the current layout can be resolved.

According to the lines L1 to L5 based on the partial structure analysis processing (S3), the user 15 can understand that, in the optimal layout, the easiness of the movement of the worker W can be improved in the portion where the intervals are provided between the facility E7 and the facilities E3, E5, E6 from the initial layout. The user 15 can achieve a convincing proposal, for example, by presenting an improvement factor of the optimal layout. In addition, in the example of Fig. 6, even in a case where adoption of the entire optimal layout is difficult, a partial layout, such as an arrangement with spaces between the facility E3 and the hub facility E7 and between the facility E5 and the hub facility E7 can be proposed.

2-2-1. Layout Optimization Processing

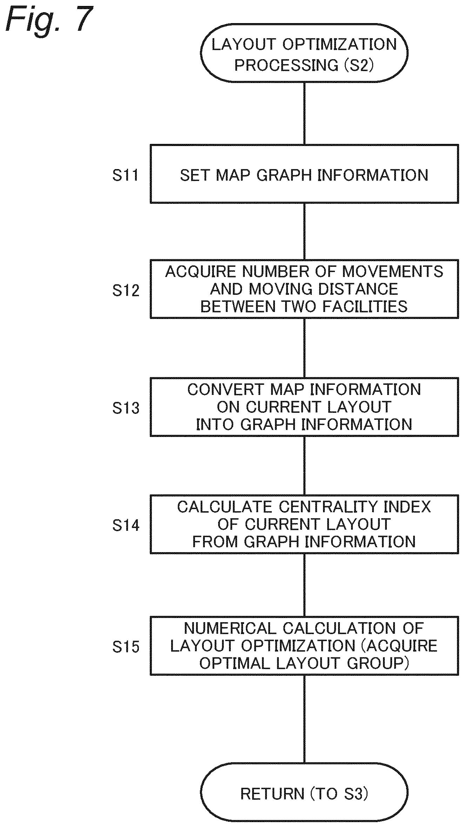

The layout optimization processing in step S2 in Fig. 4 will be described with reference to Figs. 7 to 8.

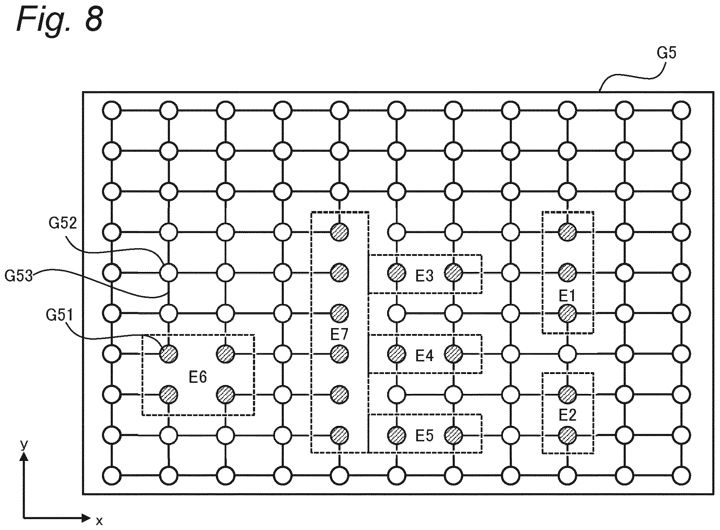

Fig. 7 is a flowchart illustrating the layout optimization processing (S2) in the layout analysis device 2. Fig. 8 is a diagram illustrating map graph information G5 in the layout optimization processing (S2). The map graph information G5 is graph information for equally dividing to handle each of the facilities E1 to E7.

First, the controller 20 sets the map graph information G5, based on the map information D2 on the current layout (S11). The map graph information G5 in step S11 is illustrated in Fig. 8.

Fig. 8 illustrates the map graph information G5 corresponding to the map information D2 on the current layout illustrated in Fig. 3A. The map graph information G5 includes a plurality of facility nodes G51, a plurality of passage nodes G52, and a plurality of moving edges G53. Hereinafter, the generic term of the facility nodes G51 and the passage nodes G52 is referred to as "segment nodes G50".

The segment nodes G50 are arranged at a predetermined pitch to equally divide an area in a coordinate system (x, y) corresponding to the map information D2. The facility nodes G51 are nodes located in an area where the facilities E are arranged in the map information D2. The facility nodes G51 are managed to identify the individual facilities E1 to E7. The passage nodes G52 are nodes located in a passage having no facility E in the map information D2.

The predetermined pitch of the segment nodes G50 is set from the viewpoint of representing each of the facilities E1 to E7 in the map information D2 by an integer number of the facility nodes G51, and are set by a user operation on the user interface 22, for example. The predetermined pitch may be automatically set by the controller 20, based on the least common multiple of the facilities E1 to E7. The predetermined pitch of the map graph information G5 may be set separately in x and y directions. In this case, the moving edges G53 may respectively have weights corresponding to the pitches in the corresponding direction.

The moving edges G53 are edges indicating whether the worker W can move between the two segment nodes G50 for each two adjacent segment nodes G50. For example, the passage nodes G52 and the facility nodes G51 are connected respectively by the moving edges G53 in the case where the facilities E of the facility nodes G51 are accessible from the positions of the passage nodes G52, and are not connected in the case where the facilities E are not accessible (e.g., passages behind the facilities E). The moving edge G53 is not provided between the two facility nodes G51. The two passage nodes G52 are connected by the moving edge when the worker W can pass through the corresponding passage, and are not connected otherwise.

Returning to Fig. 7, the controller 20 acquires the number of movements the worker W has made and the moving distance of the worker W between the two facilities E for each combination of the two facilities E in all the facilities E1 to E7, based on the trajectory data D1 and the map graph information G5 (S12). The moving distance is a distance that the worker W is presumed to be movable between the two facilities E through a passage where the facilities E1 to E7 are not arranged in various layouts.

For example, the controller 20 calculates the number of movements by counting the number of trajectories from one facility E to the other facility E of the two facilities E in the trajectory data D1. By applying the Dijkstra method to the map graph information G5, the controller 20 calculates the shortest route among movable routes between the two facilities E on the map. For example, the above calculation is performed for each facility node G51 and is managed in units of facilities E. The number of movements may be counted by distinguishing the directions of the trajectories between the two facilities E. The calculation of the moving distance may be limited to a combination of the two facilities E between which the number of movements is a predetermined number of times (e.g., once) or more.

Next, the controller 20 converts the map graph information G5 on the current layout into the graph information G1 on the current layout as illustrated in Fig. 5A, based on the calculated number of movements and moving distance, for example (S13).

For example, in the graph information G1, the edge Ge is set between the two facilities E having the number of the movements that is a predetermined number of times or more, and is not set between two facilities E having the number of the movements less than the predetermined number of times. For example, the predetermined number of times is the number of times indicating that the worker W has moved, and is, e.g, once. The predetermined number of times may be a plurality of times set from the viewpoint of limiting to steady movement by the work difference W. For each edge Ge, the moving distance and the number of movements between the corresponding two facilities E can be set as weight values, for example. Alternatively, the presence or absence of the edge Ge may be reset by a threshold determination for the moving distance or the like.

Next, the controller 20 calculates the centrality index of the current layout, based on the graph information G1 on the current layout (S14). The processing in step S14 is pre-processing for performing the centrality index analysis processing (S4 in Fig. 4), and details thereof will be described later.

Next, the controller 20 executes numerical simulation of the layout optimization, based on the calculated number of movements and moving distance between the facilities E and the map graph information G5, for example (S15). For example, the controller 20 solves the optimization problem expressed by the following expression (1) using the map graph information G5 on the current layout as an initial value.

[Mathematical Expression 1]

$$\min \sum_{i=1}^{N} \sum_{j=1}^{N} \sum_{k=1}^{N} \sum_{l=1}^{N} f_{k,\ l} d_{i,\ j} X_{i,\ k} X_{j,\ l} \qquad \cdots (1)$$

In the above expression (1), N indicates the number of segment nodes G50 including the facility nodes G51 and the passage nodes G52, i, j, k, and l indicate integers of 1 to N, and each take a sum $\Sigma$. $X_{ik}$ and $X_{jl}$ are variables indicating a provisional solution of a layout. For example, $X_{ik}$ is "1" in a case where the k-th segment node G50 is disposed at the i-th position, and is "0" in the other cases. Further, $f_{kl}$ is the number of movements between the k-th segment node G50 and the l-th segment node G50. For example, in a case where the k-th and l-th segment nodes G50 are the facility nodes G51, $f_{kl}$ indicates the number of movements between the two facilities E including each facility nodes G51, and $f_{kl} = 0$ otherwise. Further, $d_{ij}$ indicates a moving distance between the i-th position and the j-th position.

Here, $f_{kl}$ is set to a predetermined values M in a case where the k-th and l-th facility nodes G51 are included in the same facility E. The predetermined value M is set to a sufficiently large value so that an objective function of the above expression (1) has a large value when the two facility nodes G51 are separated. According to this, a provisional solution such that the plurality of facility nodes G51, which should be included in the same facility E, are arranged apart can be excluded from the viewpoint of minimizing the objective function.

In step S15, in the annealing method for example, the controller 20 sets the provisional solution of the above expression (1) to exchange the positions of the facility nodes G51, and repeats the calculation processing for calculating the objective function. The exchange of the positions is not limited to between the facility nodes G51, and may be between the facility node G51 and the passage node G52, or between the passage nodes G52. In the above iterative calculation processing, the controller 20 of the layout analysis device 2 in the present embodiment sequentially holds, in the memory 21, information indicating the layout of the provisional solution in which the value of the objective function is smaller than an initial value (i.e., a value in the case of the current layout). The information indicating the optimal layout group that is the plurality of layouts held in this manner is used in the subsequent partial structure analysis processing (S3).

For example, by repeating the above calculation processing until the end condition of the annealing method is satisfied, the controller 20 stores, in the memory 21, the provisional solution finally providing the smallest objective function as the optimal layout in step S15.

Upon completion of the above numerical simulation (S15) of the layout optimization, the controller 20 ends the layout optimization processing (S2), and proceeds to step S3 in Fig.4, for example.

According to the above layout optimization processing (S2), by using the map graph information G5 obtained by equally dividing each facility E at a predetermined pitch by the segment nodes G50 (S11), the numerical calculation of the layout optimization can be performed for the plurality of facilities E1 to E7 having various sizes. Further, information to be used in the subsequent partial structure analysis processing (S3) and centrality index analysis processing (S4) can also be acquired (S14 and S15).

2-2-2. Partial Structure Analysis Processing

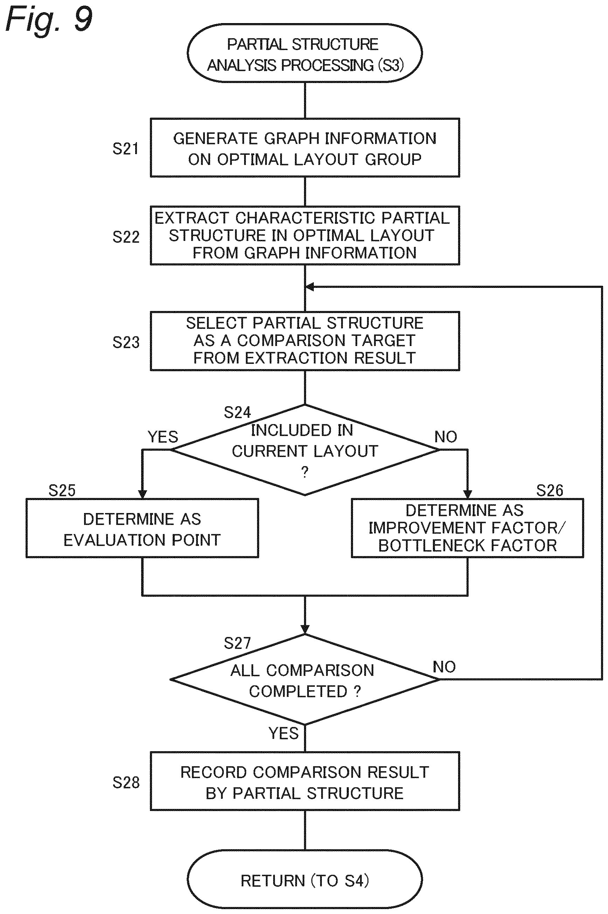

The partial structure analysis processing in step S3 of Fig. 4 will be described with reference to Figs. 9 to 10.

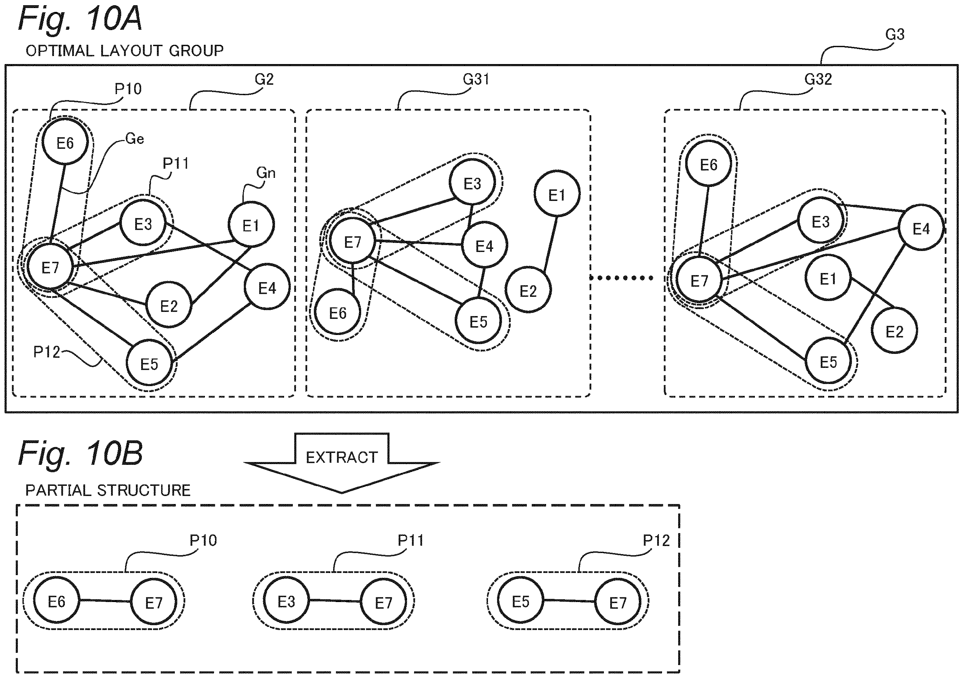

Fig. 9 is a flowchart illustrating the partial structure analysis processing (S3 in Fig. 4) in the layout analysis device 2. Figs. 10A and 10B are diagrams for explaining the partial structure analysis processing (S3).

First, based on the information acquired in the layout optimization processing (S2), the controller 20 generates graph information on an optimal layout group, for example (S21). The graph information generated in step S21 is illustrated in Fig. 10A.

Fig. 10A illustrates graph information G3 on the optimal layout group acquired in the layout optimization of the examples in Figs. 5A and 5B. The graph information G3 on the optimal layout group includes graph information G2, G31, and G32 respectively corresponding to layouts included in the optimal layout group. The edge Ge in the graph information G3 on the optimal layout group is limited to between the nodes Gn where the number of movements is a predetermined number of times or more and the moving distance between the facilities E is a threshold or less in the graph information G2, G31, and G32 of each layout. For example, a threshold is set in advance as a reference with a relatively shorter moving distance. Each edge Ge does not particularly have weighting and orientation, for example.

Next, the controller 20 analyzes the generated graph information G3 on the optimal layout group in accordance with the graph theory, to extract a characteristic partial structure in the optimal layout, for example (S22). The partial structure extracted in step S22 is illustrated in Fig. 10B.

Fig. 10B illustrates characteristic partial structures P10, P11, and P12 of the optimal layout in the graph information G3 on the optimal layout group illustrated in Fig. 10A. The controller 20 analyzes the graph information G3 on the optimal layout group using, e.g., a Chunkless Graph Based Induction (Cl-GBI) method, to extract partial structures P10 to P12 common among the plurality of pieces of the graph information G2, G31, and G32 in the optimal layout group (S22). For example, the partial structure P10 is a structure where the node Gn of the facility E6 and the node Gn of the facility E7 are connected by the edge Ge, and indicates an arrangement where the number of movements between the facilities E6 and E7 is relatively bigger and the moving distance is relatively shorter.

Next, the controller 20 performs processing for comparing the current layout with the current layout, based on the partial structures P10 to P12 extracted using the optimal layout group as described above (S23 to S27). For example, the controller 20 first sequentially selects, as a comparison target, one partial structure among the partial structures P10 to P12 extracted in the optimal layout (S23).

The controller 20 determines whether the partial structure selected in the optimal layout is included in the graph information G1 (Fig. 3A) on the current layout (S24). In the processing in step S3, also in the graph information G1 on the current layout, only the edge Ge with a relatively shorter moving distance is considered, and the edge Ge indicated by the broken line in Fig. 3A is not considered.

For example, in the graph information G1 on the current layout, as the nodes Gn of the facilities E6 and E7 are connected to each other by the edge Ge, the controller 20 determines that the partial structure P10 is included in the current layout (YES in S24). On the other hand, in the graph information G1 on the current layout, no edge Ge is present between the facilities E7 and E3 and between the facilities E7 and E4, and the controller 20 determines that the partial structures P11 and P12 are not included in the current layout (NO in S24).

As a comparison result of the partial structure P10 included in the current layout (YES in S24), the controller 20 determines the partial structure P10 as an evaluation point of the current layout (S25). For example, the controller 20 determines to display the evaluation line L5 corresponding to the partial structure P10 on the analysis screen (Fig. 6) of the display 23.

On the other hand, as a comparison result of the partial structure P11 not included in the current layout (NO in S24), the controller 20 determines the partial structure P11 as an improvement factor of the optimal layout (S26). The controller 20 determines, as a bottleneck factor of the current layout, the corresponding location P13 of the partial structure P11 in the graph information G1 on the current layout (S26). For example, the controller 20 determines to display the improvement factor line L1 corresponding to the partial structure P11 and the bottleneck factor line L3 corresponding to the corresponding location P13 (see Fig. 6).

The controller 20 determines whether the comparison between the current layout and the optimal layout of the partial structures P10 to P12 is completed depending on whether the comparison result as described above is determined for all the partial structures P10 to P12, for example (S27). When the partial structure P12 for which the comparison result has not been determined is present (NO in S27), the controller 20 performs the processing in and after step S24 again for the partial structure P12. By repeating steps S23 to S27, the comparison results of the partial structures P10 to P12 are determined (YES in S27).

When the comparison between the current layout and the optimal layout of the partial structures P10 to P12 is completed (YES in S27), the controller 20 generates information indicating the determination results in steps S25 and S26 and records the information in the memory 21 (S28).

The controller 20 ends the partial structure analysis processing (S3) upon recording the determination information on the partial structures P10 to P12 (S28), and proceeds to step S4 in Fig. 4, for example. Thereafter, referring to the determination information in step S28, the controller 20 displays the evaluation line L5 corresponding to the partial structure P10 on the analysis screen in Fig. 6 (S5). Similarly, the controller 20 displays the improvement factor lines L1 and L2 corresponding to the partial structures P11 and P12, and the bottleneck factor lines L3 and L4 corresponding to the corresponding locations P13 and P14 (S5).

According to the partial structure analysis processing (S3) described above, the partial structures P10 to P12 of the optimal layout are extracted from the graph information G3 on the optimal layout group optimized more than the current layout (S22) by the Cl-GBI method, for example. As a result, characteristic portions of the optimal layout can be specified. In the present embodiment, the extraction (S22) of the partial structures P10 to P12 is not particularly limited to the Cl-GBI method, and for example, the GBI method or the Beam-wise Graph Based Induction(B-GBI) method may be used.

2-2-3. Centrality Index Analysis Processing

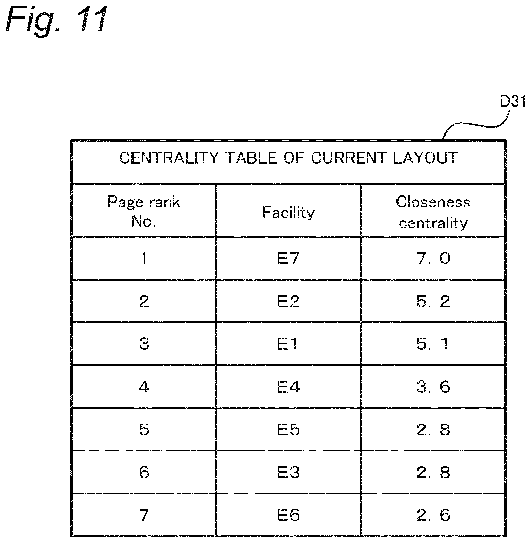

The centrality index analysis processing in step S4 of Fig. 4 will be described with reference to Figs. 11 to 13.

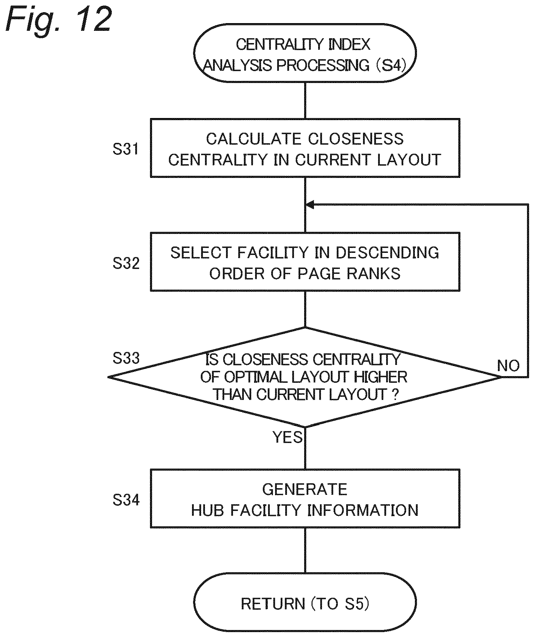

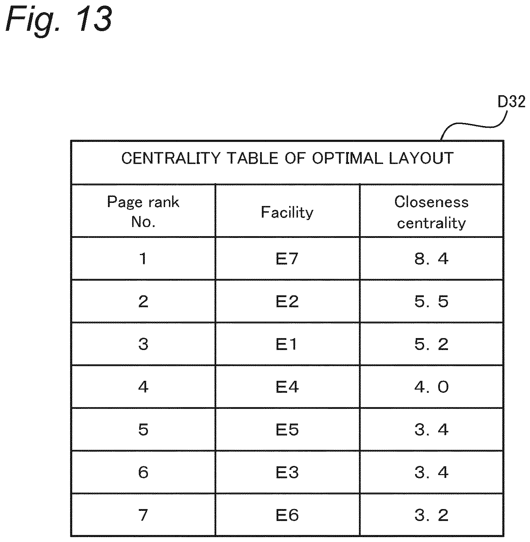

Fig. 11 is a centrality table D31 of a current layout in the layout analysis device 2. Fig. 12 is a flowchart illustrating the centrality index analysis processing (S4 in Fig. 4) in the present embodiment. Fig. 13 illustrates the centrality table D31 of the optimal layout.

The flowchart illustrated in Fig. 12 starts with the centrality table D31 of the current layout illustrated in Fig. 11 being stored in the memory 21, for example. The centrality table D31 of the current layout indicates a calculation result of the centrality index of the current layout in step S14 of Fig. 7.

In step S14 of Fig. 7, the controller 20 calculates the page ranks of all the facilities E1 to E7, based on the graph information G1 on the current layout obtained in step S13, for example. For example, the controller 20 records information for identifying each facility E in the centrality table D31 in order from the facility E7 having the highest page rank. The controller 20 calculates the closeness centrality of each facility E, based on the graph information G1 on the current layout, and records the calculated value of the closeness centrality in the centrality table D31. The closeness centrality may be calculated with limiting for a predetermined number of the facilities E having higher page ranks.

Thereafter, in the centrality index analysis processing (S4 in Fig. 4), as illustrated in Fig. 12, the controller 20 first calculates the closeness centrality of each facility E in the optimal layout, based on the graph information G2 on the optimal layout, for example (S31). As illustrated in Fig. 13, the controller 20 stores the calculated closeness centrality for each facility E in a centrality table D32 of the optimal layout, for example.

In the centrality table D32 of the optimal layout, as illustrated in Fig. 13, the identification information on the facilities E is arranged in the same page rank order as in the centrality table D31 (Fig. 11) of the current layout, for example. The page ranks do not particularly change between the current layout and the optimal layout, and can be used as a common index when the current layout and the optimal layout are compared.

Next, the controller 20 compares the current layout with the optimal layout, based on the calculation result of the centrality index in each layout as described above (S32 to S33). For example, the controller 20 first selects one facility E as a comparison target in descending order of the page ranks (S32).

Referring to the centrality tables D31 and D32, the controller 20 determines whether the closeness centrality of the optimal layout is higher than the centrality of the current layout for the selected facility E (S33).

When determining that the closeness centrality of the optimal layout is higher than the closeness centrality of the current layout for the selected facility E (YES in S33), the controller 20 generates hub facility information indicating the selected facility E as a hub facility and records the hub facility information in the memory 21 (S34). For example, the hub facility information includes closeness centrality of the current layout and closeness centrality of the current layout for the hub facility, and the identification information on the hub facility.

On the other hand, when determining that the closeness centrality of the optimal layout is not higher than the closeness centrality of the current layout for the selected facility E (NO in S33), the controller 20 newly selects the facility E having the next highest page rank (S32), and performs step S33 again. As the optimal layout of the present embodiment is obtained by optimization that minimizes the total moving distance of the worker W, it is considered that at least one of the facilities E1 to E7 in the workplace 10 has closeness centrality higher than in the current layout.

The controller 20 ends the centrality index analysis processing (S4) upon recording the hub facility information (S34), and proceeds to step S5 in Fig. 4. At this time, the controller 20 displays the hub facility messages M1 and M2 on the analysis screen of Fig. 6, based on the hub facility information in step S34 (S5).

According to the centrality index analysis processing (S4), the hub facility E7 is automatically extracted by using, e.g., the page ranks, and it can be observed that the closeness centrality of the hub facility E7 is improved by comparing the current layout with the optimal layout (S34).

The page ranks in the present embodiment will be described more specifically below. According to the page ranks, in the graph information G1 and G2, the significance of the node Gn is measured from the following viewpoints, for example.

(1) The significant node Gn is connected to the edge Ge, that is, linked from more nodes Gn.
(2) The significant node Gn is linked from the more significant nodes Gn.
(3) The significant node Gn is linked from the node Gn that the number of edges Ge connected, that is, the number of links is smaller.

In the present embodiment, the page ranks as described above are applied to the graph information G1 and G2 on various layouts where the node Gn indicates the facility E and the edge Ge indicates the presence or absence of movement. This makes it possible to measure, in the plurality of facilities E1 to E7 in the graph information G1 and G2, the degree of functioning as a hub facility, that is, the significance of each facility E based on the idea that the facility E where the movement from the other facilities E is more concentrated is more significant. As the significance of the layout is measured just based on the presence or absence of movement, the page ranks have a common value before and after the layout is changed.

For example, the page ranks are calculated by a matrix operation using an adjacency matrix of a directed graph indicating the presence or absence of the movement of the edge Ge from one facility E to the other facility E in the graph information G1 and G2. Specifically, the controller 20 calculates the value of each element of an eigenvector having the biggest eigenvalue in eigenvectors of the matrix B = ($b_{ij}$) having a matrix element $b_{ij}$ of the following expression (2) as the page rank (S14).

$$b_{ij} = a_{ij}/\Sigma_k(a_{kj})...(2)$$

In the above expression (2), $a_{ij}$ is a matrix element of a matrix A obtained by transposing the adjacency matrix of the directed graph. The sum $\Sigma$ by k is replaced by the number of the nodes Gn, that is, the number of the facilities E1 to E7.

In the present embodiment, the controller 20 calculates the closeness centrality by using the following expression (3), for example (S14 and S31).

[Mathematical Expression 2]

$$CC_i = \frac{n-1}{\sum_{j=1}^{n-1} d(i,j)} \qquad \cdots(3)$$

In the above expression (3), $CC_i$ represents closeness centrality of the i-th facility E, n indicates the number of the facilities E, and d(i,j) indicates the moving distance between the i-th facility E and the j-th facility E. The sum $\Sigma$ by j is replaced by n-1 facilities E other than the i-th facility E.

The closeness centrality $CC_i$ increases as the corresponding i-th facility E is close to the other facilities E having the movement of the worker W thereto. Therefore, as the closeness centrality $CC_i$ of the hub facility E is higher, the worker W can access to the hub facility E more easily, and the work efficiency of the worker W can be improved.

3. Summary

As described above, the layout analysis device 2 according to the present embodiment generates information indicating a layout analysis for the plurality of facilities E. The layout analysis device 2 includes the memory 21 that stores the map information D2 on a current layout an example of the first layout indicating the arrangement of the plurality of facilities E, and the controller 20 that acquires an optimal layout as an example of the second layout calculated by numerical simulation of optimization (S2) to optimize the arrangement of the plurality of facilities E from the current layout. The controller 20 specifies a partial structure or a hub facility as an example of a characteristic portion in the optimal layout as compared with the current layout (S3 and S4). The controller 20 generates the variety of the lines L1 to L5 and the messages M1 and M2 as examples of the analysis information indicating the relation between the optimization and at least one of the portion specified in the optimal layout or the portion corresponding to the portion specified in the current layout (S3 to S5).

According to the layout analysis device 2 described above, the user 15 can understand a portion related to optimization in the optimal layout from the various analysis information, and it can facilitate the user to analyze the optimized layout where the arrangement of facilities is optimized by numerical simulation.

In the layout analysis device 2 of the present embodiment, the numerical simulation of the optimization is performed to minimize the total distance that the worker W as an example of the moving object repeats the movement between the plurality of facilities E. The controller 20 specifies a characteristic portion related to the movement between the plurality of facilities E in the optimal layout. Specifically, the controller 20 specifies a characteristic portion in the optimal layout, based on the graph information G1 and G2 corresponding to respective layouts. The graph information G1 and G2 includes the plurality of nodes Gn respectively corresponding to the plurality of facilities E, and the plurality of edges Ge set between the nodes Gn. The data analysis of the graph theory based on the graph information G1 and G2 makes it possible to automatically specify which portion in the optimal layout is considered to have a causal relation with the layout optimization.

In the layout analysis device 2 of the present embodiment, the controller 20 acquires information indicating an optimal layout group as an example of the layout group information indicating a plurality of layouts including an optimal layout calculated to be more optimized than the first layout in the numerical simulation of optimization (S15). Based on the acquired layout group information, the controller 20 specifies, as the characteristic portion, the common portion such as partial structures P10 to P12 that are common among the plurality of layouts (S22). This makes it possible to understand the characteristic portion in the optimal layout by using the information acquired during the numerical simulation of the layout optimization.

In the layout analysis device 2 of the present embodiment, the graph information G3 on the optimal layout group as an example of the layout group information includes the graph information G2, G31, and G32 respectively corresponding to the plurality of layouts. The controller 20 specifies the partial structures P10 to P12 (S22) by using for the graph information G3 on the optimal layout group at least one of the Cl-GBI method, the GBI method, or the B-GBI method . For example, with the Cl-GBI method, the characteristic partial structures P10 to P12 in the optimal layout can be accurately extracted.

In the layout analysis device 2 of the present embodiment, when the partial structures P11 and P12 are not included in the current layout (NO in S24), the improvement factor lines L1 and L2 as an example of the analysis information indicate the partial structures P11 and P12 as optimized factors by which the optimal layout is optimized from the current layout (S26). According to this, the user 15 can understand the improvement factor in the optimal layout.

In the layout analysis device 2 of the present embodiment, when the partial structure P10 is not included in the current layout (NO in S24), the bottleneck factor lines L3 and L4 as an example of the analysis information indicate the corresponding locations P13 and P14 as non-optimal factors in the current layout (S26). According to this, the user 15 can understand the factor of the bottleneck in the current layout.

In the layout analysis device 2 of the present embodiment, when the partial structure P10 is included in the current layout (YES in S24), the evaluation line L5 as an example of the analysis information indicates the partial structure P10 as a portion common between the current layout and the optimal layout. According to this, the user 15 can understand a good evaluation point in the current layout from the viewpoint of comparison with the optimal layout.

In the layout analysis device 2 of the present embodiment, the controller 20 compares the centrality index of the current layout with the centrality index of the optimal layout (S32 to S33), and specifies a hub facility as an example of a characteristic portion in the optimal layout (S34). Use of such a centrality index of each layout makes it possible to understand a characteristic portion in the optimal layout from the relation with the layout optimization.

In the layout analysis device 2 of the present embodiment, the hub facility messages M1 and M2 as examples of the analysis information indicate that the centrality index (e.g., closeness centrality) for the specified portion in the optimal layout is higher than the centrality index for the corresponding portion in the current layout. From such improvement of the centrality index, the user 15 can understand an improvement factor in the optimal layout.

In the layout analysis device 2 of the present embodiment, the optimization numerical simulation (S2) is performed to minimize the total distance that the worker W as an example of the moving object moves between the plurality of facilities E. The specified portion is, for example, a hub facility E on which the movement of the moving object is concentrated in the plurality of facilities E. The analysis information indicates that, for the hub facility E, closeness centrality, which is an example of the centrality index with respect to mobility of the moving object, is higher in the optimal layout than in the current layout. According to this, the user 15 can understand that the accessibility of the hub facility E has improved in the optimal layout as an improvement factor.

In the layout analysis device 2 of the present embodiment, the centrality index includes a page rank or closeness centrality. By using such a centrality index, for example, the hub facility E in the workplace 10 can be extracted and the accessibility thereof can be understood.

In the layout analysis device 2 of the present embodiment, from an initial value indicating a state that the area where each facility E is located in the current layout is divided into segment areas having a predetermined size by the segment nodes G50 at a predetermined pitch, the optimization numerical simulation (S2) is performed to collectively arrange the segment areas respectively corresponding to the facilities E (S11 and S15). This enables the numerical simulation of the layout optimization such as the annealing method for the plurality of facilities E1 to E7 having different sizes, and thus layout optimization can be facilitated.

In the layout analysis device 2 of the present embodiment, the controller 20 performs the numerical simulation for optimizing the arrangement of the plurality of facilities E from the current layout to calculate the optimal layout (S2). As described above, the layout analysis device 2 can easily use the information during the numerical simulation by performing the optimization numerical simulation.

In the present embodiment, the layout analysis device 2 further includes the display 23 that displays the analysis information generated by the controller 20. The user 15 can flexibly analyze the optimal layout by checking the analysis information displayed on the display 23.

In the present embodiment, provided is a layout analysis method for generating information indicating a layout analysis for the plurality of facilities E. The method includes (S2) acquiring an optimal layout calculated by numerical simulation for optimizing an arrangement of the plurality of facilities E from a current layout indicating the arrangement of the plurality of facilities E, (S3 and S4) specifying a characteristic portion in an optimal layout as compared with the current layout, and (S3 to S5) generating analysis information indicating a relation between the optimization and at least one of the specified portion in the optimal layout or a portion corresponding to the specified portion in the current layout.

In the present embodiment, a program for causing the controller 20 of a computer such as the layout analysis device 2 to execute the above layout analysis method is provided. According to the layout analysis method of the present embodiment, the layout where the arrangement of the facilities E is optimized can be flexibly analyzed by the user 15.

(Other Embodiments)

The first embodiment has been described above as the example of the technique disclosed in this application. However, the technique in the present disclosure is not limited thereto, and is applicable also to embodiments in which changes, replacements, additions, omissions and the like are made as appropriate. A new embodiment can be made by combining the components described in the above embodiments. Therefore, other embodiments will be exemplified below.

In the first embodiment, the page ranks and the closeness centrality are exemplified as examples of the centrality index. In the layout analysis device 2 of the present embodiment, the centrality index is not particularly limited and may be betweenness centrality, for example. For example, according to the betweenness centrality in the map graph information G5, busyness can be calculated for each passage node G52. In the layout analysis device 2 of the present embodiment, the centrality index may include at least one of page rank, closeness centrality, and betweenness centrality.

In the first embodiment described above, the expression (3) of the closeness centrality has been exemplified. In the present embodiment, the closeness centrality is not limited to the above expression (3), and may be calculated by, for example, the following expression (4).

[Mathematical Expression 3]

$$C_{WF}(i) = \frac{\sum_j f(j)}{n-1} \frac{\sum_j f(j)}{\sum_j f'(j)} \qquad \cdots (4)$$

In the above expression (4), $C_{WF}(i)$ indicates closeness centrality of the i-th facility E, and n indicates the number of the facilities E. The sum $\Sigma$ by j is replaced by n-1 facilities E other than the i-th facility E, and f(j) matches the number of movements in a case where the worker W has moved between the i-th facility E and the j-th facility E, and is "1" in a case where the worker W has not moved. Further, f(j) indicates a product of the number of movements and the moving distance in a case where the worker W has moved between the i-th facility E and the j-th facility E, and matches the movement distance in a case where no movement occurs.

According to the closeness centrality Cwr(i) of the above expression (4), as the number of movements is considered in the calculation of the closeness centrality, it is possible to facilitate to quantitatively evaluate the significance of the facility E having a large number of movements. For example, the closeness centrality Cwr(i) of the above expression (4) may be used without being particularly used in combination with the page ranks.

In the above embodiments, the example of minimizing the total distance of movement of the worker W has been described as an example of the optimization condition. In the present embodiment, the optimization condition is not limited to the above, and can be set to various conditions for improving work efficiency in the workplace 10. For example, the optimization condition of the present embodiment may be minimization of the busyness in the workplace 10. As the objective function to be minimized in the layout optimization in this case, the sum of the betweenness centrality across all the passage nodes G52 may be used. In the application to the field of distribution and the like, a distribution amount may be used in addition to or instead of the number of movements.

In the above embodiments, the application example of the algorithm for equally dividing the facility E using the map graph information G5 in the layout optimization has been described, but the layout analysis device 2 of the present embodiment is not particularly limited thereto. The layout analysis device 2 of the present embodiment does not particularly need to use the map graph information G5, and may perform layout optimization using various algorithms that do not equally divide the facility E. For example, layout optimization may be performed in the workplace 10 where the plurality of facilities E have an identical size.

In the above embodiments, the example of using the Dijkstra method for calculating the moving distance between the facilities E in each layout has been described, but the present disclosure is not particularly limited thereto. In the present embodiment, various methods such as the Warshall Floyd method may be used to calculate the moving distance. As the moving distance between the facilities E, a set value of a distance set for each combination of positions on a map may be used.

In the above embodiments, an object using the annealing method in the numerical simulation of the layout optimization has been described. In the layout analysis device 2 of the present embodiment, the numerical simulation of the layout optimization is not limited to the above, and various methods can be used. For example, an approximate solution by a neighborhood search such as a hill climbing method or a genetic algorithm may be used. Even in this case, the optimal layout group can be acquired from the information during the calculation of the layout optimization. In a case where the optimal layout group is not used in particular, various numerical meter methods can be further used.

In the above embodiments, the example has been described in which the layout analysis device 2 performs the numerical simulation for the layout optimization. In the present embodiment, the numerical simulation of the layout optimization may be performed outside the layout analysis device 2, or may be performed by an external server such as the trajectory management server 12. In this case, the controller 20 of the layout analysis device 2 may acquire information such as the optimal layout by receiving the optimal layout of the calculation result in the external server or various pieces of information during the calculation via the network I/F 25, for example.

In the above embodiments, the worker W has been described as the example of the moving object. In the present embodiment, the moving object may be a person who is not the worker W, or may be a living being, various vehicles, robots, or the like without being limited to the person.

The embodiments are described above as the example of the technique in the present disclosure. For this reason, the accompanying drawings and detailed description are provided.

Therefore, the components described in the accompanying drawings and the detailed description may include not only the components essential for solving the problem but also the components not essential for solving the problem for illustrating the above-mentioned technique. Therefore, it should not be immediately construed that these components that are not essential are essential even if the unessential components are described in the accompanying drawings and the detailed description.

Further, since the above-described embodiments are for exemplifying the technique in the present disclosure, various changes, replacements, additions, omissions and the like can be made within the scope of claims or their equivalents.

INDUSTRIAL APPLICABILITY

The present disclosure is applicable to data analysis related to a layout where facilities are arranged in various fields such as a factory and distribution.

**Claims**

1. A layout analysis device for generating information indicating a layout analysis for a plurality of facilities, the layout analysis device comprising:

   a memory configured to store a first layout indicating an arrangement of the plurality of facilities; and
   a controller configured to acquire a second layout calculated by numerical optimization to optimize the arrangement of the plurality of facilities from the first layout,
   wherein the controller is configured to:

   specify a characteristic portion in the second layout as compared with the first layout; and
   generate analysis information indicating a relation between the optimization and at least one of the specified portion in the second layout or a corresponding portion to the specified portion in the first layout.

2. The layout analysis device according to claim 1, wherein the controller is configured to:

   acquire layout group information indicating a plurality of layouts including the second layout, the plurality of layouts being calculated to be more optimal than the first layout in the numerical optimization; and
   specify a common portion among the plurality of layouts as the characteristic portion, based on the acquired layout group information.

3. The layout analysis device according to claim 2,

   wherein the layout group information includes graph information respectively corresponding to the plurality of layouts, and
   wherein the controller is configured to specify the common portion, by using for the layout group information at least any one of a Chunkless Graph Based Induction (Cl-GBI) method, a Graph Based Induction (GBI) method, or a Beam-wise Graph Based Induction (B-GBI) method.

4. The layout analysis device according to claim 2 or 3, wherein the analysis information indicates the specified portion as an optimized factor when the common portion is not included in the first layout, the optimized factor being a factor by which the second layout is optimized from the first layout.

5. The layout analysis device according to any one of claims 2 to 4, wherein the analysis information indicates the corresponding portion as a non-optimal factor when the common portion is not included in the first layout, the non-optimal factor being a factor by which the first layout is not optimal.

6. The layout analysis device according to any one of claims 2 to 5, wherein the analysis information indicates the specified portion as a portion common between the first and second layouts, when the common portion is included in the first layout.

7. The layout analysis device according to any one of claims 1 to 6, wherein the controller is configured to compare a centrality index of the first layout with a centrality index of the second layout, to specify the characteristic portion in the second layout.

8. The layout analysis device according to claim 7, wherein the analysis information indicates that the centrality index of the second layout for the specified portion is higher than the centrality index of the first layout for the corresponding portion.

9. The layout analysis device according to claim 8,

wherein the numerical optimization is performed to minimize a total distance of movement by a moving object between the plurality of facilities,
wherein the specified portion is a facility on which the movement of the moving object is concentrated in the plurality of facilities, and
wherein the analysis information indicates that with respect to mobility of the moving object, the centrality index of the second layout for the facility, on which the movement is concentrated, is higher than the centrality index of the first layout.

10. The layout analysis device according to any one of claims 7 to 9, wherein the centrality index includes at least one of a page rank, closeness centrality, or betweenness centrality.

11. The layout analysis device according to any one of claims 1 to 10, wherein the numerical optimization is performed, from an initial value indicating a state that an area where each facility of the plurality of facilities is located in the first layout is respectively divided into segment areas, to collectively arrange the segment areas corresponding to the facility, the segment areas each having a predetermined size.

12. The layout analysis device according to any one of claims 1 to 11, wherein the controller is configured to perform the numerical the optimization to optimize the arrangement of the plurality of facilities from the first layout to calculate the second layout.

13. The layout analysis device according to any one of claims 1 to 12, further comprising a display configured to display the analysis information generated by the controller.

14. A layout analysis method for generating information indicating a layout analysis for a plurality of facilities, the layout analysis method comprising:

acquiring, by numerical optimization to optimize an arrangement of the plurality of facilities from a first layout, a second layout calculated by the numerical optimization, the first layout indicating the arrangement of the plurality of facilities,
specifying a characteristic portion in the second layout as compared with the first layout; and
generating analysis information indicating a relation between the optimization and at least one of the specified portion in the second layout or a corresponding portion to the specified portion in the first layout.

15. A program for causing a controller of a computer to perform the layout analysis method according to claim 14.

*Fig. 1*

# Fig. 2

LAYOUT ANALYSIS DEVICE

USER I/F 22

CONTROLLER 20

DEVICE I/F 24

DISPLAY 23

NETWORK I/F 25

STORAGE 21a

D2 — MAP INFO.

TEMPORARY MEMORY 21b

21

2

*Fig. 3A*

CURRENT LAYOUT

*Fig. 3B*

OPTIMAL LAYOUT

OPTIMIZE

## Fig. 4

```
                    ┌─────────────┐
                    │    START    │
                    └─────────────┘
                           │
      ┌──────────────────────────────────────────┐
  S1  │                ACQUIRE                    │
      │    TRAJECTORY DATA IN WORKPLACE           │
      └──────────────────────────────────────────┘
                           │
      ┌────┬───────────────────────────────┬─────┐
      │    │      LAYOUT OPTIMIZATION       │     │
  S2  │    │        PROCESSING (WITH        │     │
      │    │     DIVIDING FACILITY AREA)    │     │
      └────┴───────────────────────────────┴─────┘
                           │
      ┌────┬───────────────────────────────┬─────┐
  S3  │    │       PARTIAL STRUCTURE        │     │
      │    │      ANALYSIS PROCESSING       │     │
      └────┴───────────────────────────────┴─────┘
                           │
      ┌────┬───────────────────────────────┬─────┐
  S4  │    │       CENTRALITY INDEX         │     │
      │    │      ANALYSIS PROCESSING       │     │
      └────┴───────────────────────────────┴─────┘
                           │
      ┌──────────────────────────────────────────┐
      │     DISPLAY COMPARING SCREEN              │
  S5  │     BETWEEN CURRENT LAYOUT                │
      │       AND OPTIMAL LAYOUT                  │
      └──────────────────────────────────────────┘
                           │
                    ┌─────────────┐
                    │     END     │
                    └─────────────┘
```

# Fig. 5A

CURRENT LAYOUT

G1

P13

E3

Ge

Ge

P10

E1

E7

E4

E6

Gn

P14

E2

E5

LAYOUT
OPTIMIZATION

# Fig. 5B

OPTIMAL LAYOUT

G2

P10

E6

Ge

P11

Gn

E3

E1

E7

E4

P12

E2

Ge

E5

Fig. 6

## Fig. 7

```
          ( LAYOUT OPTIMIZATION )
          (   PROCESSING (S2)   )
                    │
                    │
        S11 │  SET MAP GRAPH INFORMATION
                    │
                    │
              ACQUIRE NUMBER OF MOVEMENTS
        S12 │    AND MOVING DISTANCE
                BETWEEN TWO FACILITIES
                    │
                    │
               CONVERT MAP INFORMATION
        S13 │     ON CURRENT LAYOUT
               INTO GRAPH INFORMATION
                    │
                    │
              CALCULATE CENTRALITY INDEX
        S14 │     OF CURRENT LAYOUT
                FROM GRAPH INFORMATION
                    │
                    │
               NUMERICAL CALCULATION OF
        S15 │ LAYOUT OPTIMIZATION (ACQUIRE
                OPTIMAL LAYOUT GROUP)
                    │
                    │
              (    RETURN (TO S3)    )
```

*Fig. 8*

# Fig. 9

```
        ╭─────────────────────────╮
        │    PARTIAL STRUCTURE     │
        │ ANALYSIS PROCESSING (S3) │
        ╰─────────────────────────╯
                     │
        ┌─────────────────────────┐
  S21   │  GENERATE GRAPH INFORMATION  │
        │   ON OPTIMAL LAYOUT GROUP    │
        └─────────────────────────┘
                     │
        ┌─────────────────────────┐
        │ EXTRACT CHARACTERISTIC PARTIAL │
  S22   │  STRUCTURE IN OPTIMAL LAYOUT   │
        │    FROM GRAPH INFORMATION      │
        └─────────────────────────┘
                     │
        ┌─────────────────────────┐
        │  SELECT PARTIAL STRUCTURE  │
  S23   │   AS A COMPARISON TARGET    │
        │   FROM EXTRACTION RESULT    │
        └─────────────────────────┘
```

S24 — INCLUDED IN CURRENT LAYOUT ? — YES / NO

S25 DETERMINE AS EVALUATION POINT

S26 DETERMINE AS IMPROVEMENT FACTOR/ BOTTLENECK FACTOR

S27 ALL COMPARISON COMPLETED ? — NO / YES

S28 RECORD COMPARISON RESULT BY PARTIAL STRUCTURE

RETURN (TO S4)

## Fig. 10A

OPTIMAL LAYOUT GROUP

## Fig. 10B

PARTIAL STRUCTURE

EXTRACT

EP 4 383 157 A1

# Fig. 11

D31

| CENTRALITY TABLE OF CURRENT LAYOUT | | |
|---|---|---|
| Page rank No. | Facility | Closeness centrality |
| 1 | E7 | 7. 0 |
| 2 | E2 | 5. 2 |
| 3 | E1 | 5. 1 |
| 4 | E4 | 3. 6 |
| 5 | E5 | 2. 8 |
| 6 | E3 | 2. 8 |
| 7 | E6 | 2. 6 |

## Fig. 12

```
        ┌─────────────────────────────┐
        │      CENTRALITY INDEX        │
        │   ANALYSIS PROCESSING (S4)   │
        └─────────────────────────────┘
                      │
        ┌─────────────────────────────┐
  S31   │     CALCULATE CLOSENESS      │
        │  CENTRALITY IN CURRENT LAYOUT│
        └─────────────────────────────┘
                      │
        ┌─────────────────────────────┐
  S32   │   SELECT FACILITY IN DESCENDING │
        │      ORDER OF PAGE RANKS     │
        └─────────────────────────────┘
                      │
               ◇ IS CLOSENESS CENTRALITY
  S33      OF OPTIMAL LAYOUT HIGHER      ─── NO
             THAN CURRENT LAYOUT ? ◇
                      │
                     YES
                      │
        ┌─────────────────────────────┐
  S34   │         GENERATE             │
        │   HUB FACILITY INFORMATION   │
        └─────────────────────────────┘
                      │
        ┌─────────────────────────────┐
        │       RETURN (TO S5)         │
        └─────────────────────────────┘
```

# Fig. 13

D32

| CENTRALITY TABLE OF OPTIMAL LAYOUT | | |
|---|---|---|
| Page rank No. | Facility | Closeness centrality |
| 1 | E7 | 8. 4 |
| 2 | E2 | 5. 5 |
| 3 | E1 | 5. 2 |
| 4 | E4 | 4. 0 |
| 5 | E5 | 3. 4 |
| 6 | E3 | 3. 4 |
| 7 | E6 | 3. 2 |

## INTERNATIONAL SEARCH REPORT

| International application No. |
|---|
| **PCT/JP2022/019605** |

| **A.** | **CLASSIFICATION OF SUBJECT MATTER** |
|---|---|

*G06Q 10/04*(2012.01)i; *G05B 19/418*(2006.01)i
FI: G06Q10/04 300; G05B19/418 Z

According to International Patent Classification (IPC) or to both national classification and IPC

| **B.** | **FIELDS SEARCHED** |
|---|---|

Minimum documentation searched (classification system followed by classification symbols)

G06Q10/04; G05B19/418

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2012-59089 A (KONICA MINOLTA BUSINESS TECHNOLOGIES INC) 22 March 2012 (2012-03-22)<br>entire text, all drawings | 1-15 |
| A | JP 2009-193178 A (RICOH CO LTD) 27 August 2009 (2009-08-27)<br>entire text, all drawings | 1-15 |
| A | JP 2009-169633 A (INSTITUTE OF INTELLECTUAL PROPERTY STRATEGIES INC) 30 July 2009 (2009-07-30)<br>entire text, all drawings | 1-15 |
| A | JP 2015-79318 A (HITACHI LTD) 23 April 2015 (2015-04-23)<br>entire text, all drawings | 1-15 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/019605**

| Patent document cited in search report | | | Publication date (day/month/year) | Patent family member(s) | Publication date (day/month/year) |
|---|---|---|---|---|---|
| JP | 2012-59089 | A | 22 March 2012 | (Family: none) | |
| JP | 2009-193178 | A | 27 August 2009 | (Family: none) | |
| JP | 2009-169633 | A | 30 July 2009 | (Family: none) | |
| JP | 2015-79318 | A | 23 April 2015 | US 2016/0253611 A1 entire text, all drawings WO 2015/056580 A1 | |

Form PCT/ISA/210 (patent family annex) (January 2015)

**EP 4 383 157 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020119166 A